# EUROPEAN PATENT SPECIFICATION

(11) **EP 0 884 467 B1**
(45) Date of publication and mention of the grant of the patent: **14.05.2003**
(21) Application number: 98110680.0
(22) Date of filing: 10.06.1998
(51) Int. Cl.: F02D 41/40, F02D 1/06, F02M 41/12

(54) **Fuel injection apparatus of a diesel engine**
Kraftstoffeinspritzanlage eines Dieselmotors
Appareil d'injection de carburant d'un moteur diesel

(30) Priority: 13.06.1997 JP 15695497
(43) Date of publication of application: 16.12.1998
(73) Proprietor: TOYOTA JIDOSHA KABUSHIKI KAISHA, Aichi-ken 471-8571 (JP); KABUSHIKI KAISHA TOYODA JIDOSHOKKI SEISAKUSHO, Aichi-ken 448-8671 (JP)
(72) Inventor: Yasunishi, Shunsuke, Toyota-shi, Aichi-ken (JP); Ishii, Mutsunori, Kariya-shi, Aichi-ken 448-8671 (JP)
(74) Representative: Pellmann, Hans-Bernd, Dipl.-Ing.

(56) References cited:
- EP-A- 0 743 441
- US-A- 4 633 842
- US-A- 5 494 018
- DATABASE WPI Section PQ, Week 9718 Derwent Publications Ltd., London, GB; Class Q52, AN 97-197795 XP002077972 & JP 09 053484 A (MITSUBISHI MOTOR CORP) , 25 February 1997
- PATENT ABSTRACTS OF JAPAN vol. 096, no. 002, 29 February 1996 & JP 07 259622 A (TOYOTA MOTOR CORP), 9 October 1995

## Description

### BACKGROUND OF THE INVENTION

### 1. Field of the Invention

The present invention relates to a fuel injection apparatus of a diesel engine and, more particularly, to a fuel injection apparatus of a diesel engine that is suitable for injecting fuel into a diesel engine for an automobile.

### 2. Description of the Related Art

An amount of intake air of a diesel engine decreases as an atmospheric pressure goes down. When an automobile is moving in a high-altitude area, an amount of intake air is less than that when the automobile is moving in a low-altitude area. Flammability of fuel in a diesel engine decreases as an amount of intake air decreases. A diesel engine tends to exhaust smoke as the flammability goes down. Accordingly, the diesel engine tends to exhaust more smoke when the automobile moves in a high-altitude area than when it moves in a low-altitude area.

An amount of smoke exhausted from the diesel engine can be decreased by, for example, decreasing an amount of fuel supplied to the diesel engine. Accordingly, if an amount of injected fuel is decreased when the automobile moves in a high-altitude area, an amount of exhaust smoke can be decreased. However, if the amount of injected fuel is decreased, an output torque of the diesel engine is also decreased. Thus, if the above-mentioned method is used for decreasing an amount of exhaust smoke, an output torque equal to that obtained when the automobile moves in a low-altitude area cannot be obtained.

As a conventional fuel injection apparatus of a diesel engine, an apparatus that performs a prestroke control is known as disclosed in Japanese Laid-Open Patent Application No.7-259622. The above-mentioned apparatus, comprises a fuel injection pump that can vary a fuel delivery rate (an amount of fuel delivered per unit time). According to the prestroke control, the fuel delivery rate of the fuel injection pump can be appropriately varied.

The fuel injection pump supplies a large amount of fuel per unit time to the diesel engine when a high-fuel delivery rate is requested by the prestroke control. In this case, a fuel discharge pressure of the fuel injection pump is inevitably increased. The diesel engine injects fuel at a higher injection pressure as the fuel discharge pressure of the fuel injection pump is raised. Accordingly, when a high-fuel delivery rate is required by the prestroke control, fuel is injected at a high-injection pressure into an interior of the diesel engine.

The fuel injected into an interior of the diesel engine is atomized into finer mists as the injection pressure increases. The fuel injected into the diesel engine shows superior flammability as the fuel is atomized into finer mists. Accordingly, when a high-fuel delivery rate is requested by the prestroke control, the flammability of fuel can be greater than that when the fuel is injected at a regular injection pressure.

When the fuel supplied to the diesel engine shows a superior flammability, the whole fuel supplied to the diesel engine can be combusted in a good condition even if when an amount of intake air is slightly decreased. Accordingly, if a high-fuel delivery rate is requested by the prestroke control when fuel is supplied to the diesel engine, an amount of exhaust smoke can be decreased when the automobile moves in a high-altitude area without an output torque change occurring when the automobile moves from a low-altitude area to the high-altitude area.

However, in a diesel engine, a noise generated by combustion of fuel increases as the fuel shows a better flammability. Accordingly, in order to improve quietness of the diesel engine, it is not always appropriate to increase the fuel delivery rate of the fuel injection pump.

### SUMMARY OF THE INVENTION

It is a general object of the present invention to provide an improved and useful fuel injection apparatus of a diesel engine in which the above-mentioned problems are eliminated.

A more specific object of the present invention is to provide a fuel injection apparatus of a diesel engine that decreases an amount of smoke generated in the diesel engine when the diesel engine is operated in a high-altitude area.

A further object of the present invention is to provide a fuel injection apparatus of a diesel engine that decreases an amount of smoke generated in the diesel engine while a noise generated by the diesel engine is maintained to be at a low level.

In order to achieve the above-mentioned objects, there is provided according to the present invention a fuel injection apparatus of a diesel engine for injecting fuel into said diesel engine, the diesel engine intaking air at an atmospheric pressure,
characterized in that:
an injection rate of the fuel provided to the diesel engine is increased in a high-altitude area.

According to the above-mentioned invention, the injection rate achieved when the diesel engine is located in a high-altitude area is set to be higher than the injection rate achieved when the diesel engine is located in a low-altitude area. That is, fuel is injected into the diesel engine at a high rate when the diesel engine is operated in a high-altitude area. Thus, an amount of fuel provided to the diesel engine per unit time is increased when the diesel engine is operated in a high-altitude area. This results in a high-pressure injection of fuel to the diesel engine when the diesel engine is located at a high-altitude area. Thus, the fuel injected into the diesel engine is atomized in fine mist, which achieves a good flammability of the fuel. Accordingly, an amount of smoke generated in the diesel engine is reduced when the diesel engine is located in a high-altitude area.

Additionally, there is provided according to another aspect of the present invention a fuel injection apparatus of a diesel engine for injecting fuel into the diesel engine, the diesel engine intaking air at an atmospheric pressure,
characterized in that:
an injection pressure of the fuel provided to the diesel engine is increased in a high-altitude area.

According to this invention, the fuel injected into the diesel engine is atomized in fine mist, which achieves a good flammability of the fuel. Accordingly, an amount of smoke generated in the diesel engine is reduced when the diesel engine is operated in a high-altitude area.

Additionally, there is provided according to the present invention a fuel injection apparatus of a diesel engine for injecting fuel into the diesel engine, the diesel engine intaking air at an atmospheric pressure,
characterized in that:
an amount of the fuel provided to said diesel engine per unit time is changed according to a predetermined scheme when the atmospheric pressure decreases, so that the amount of the fuel per unit time is increased when the diesel engine is operated in a high-altitude area.

According to this invention, the amount of fuel per unit time is increased when the diesel engine is operated in a high-altitude area. Thus, the fuel is injected into the diesel engine at a high pressure, resulting in a good flammability of the fuel in the diesel engine. Thus, an amount of smoke generated in the diesel engine is reduced when the diesel engine is operated in a high-altitude area.

Additionally, the fuel injection apparatus according to the present invention may be provided with a fuel injection pump, and a prestroke control may be performed so that a fuel delivery rate of the fuel injection pump is set to a previously determined value designated by a map.

Accordingly, the fuel delivery rate used in the prestroke control can be set to an appropriate value when the diesel engine is operated in a high-altitude area so that an amount of smoke generated in the diesel engine is reduced.

Further, in the fuel injection apparatus according to the present invention, contents of the map may be changed when the atmospheric pressure decreases below a predetermined pressure so that the fuel delivery rate designated by the map is higher than the fuel delivery rate designated when the atmospheric pressure is above the predetermined pressure.

Accordingly, the fuel delivery rate can be increased according to the map for a high-altitude area when the diesel engine is operated at a high-altitude area, while the fuel delivery rate can be maintained to be at an appropriated value according to the map for a low-altitude area when the diesel engine is operated in a low-altitude area. Since the contents of the map are previously determined, an appropriate value can be designated by the map for both a high-altitude area and a low-altitude area.

Other objects, features and advantages of the present invention will become more apparent from the following detailed description when read in conjunction with the accompanying drawings.

### BRIEF DESCRIPTION OF THE DRAWINGS

FIG.1 is a system structure diagram of a fuel injection apparatus according to an embodiment of the present invention;
FIG.2 is a time chart for explaining an operation of the fuel injection apparatus shown in FIG.1; and
FIG.3 is a flowchart of an example of a control routine performed by the fuel injection apparatus shown in FIG.1.

### DETAILED DESCRIPTION OF THE PREFERRED EMBODIMENTS

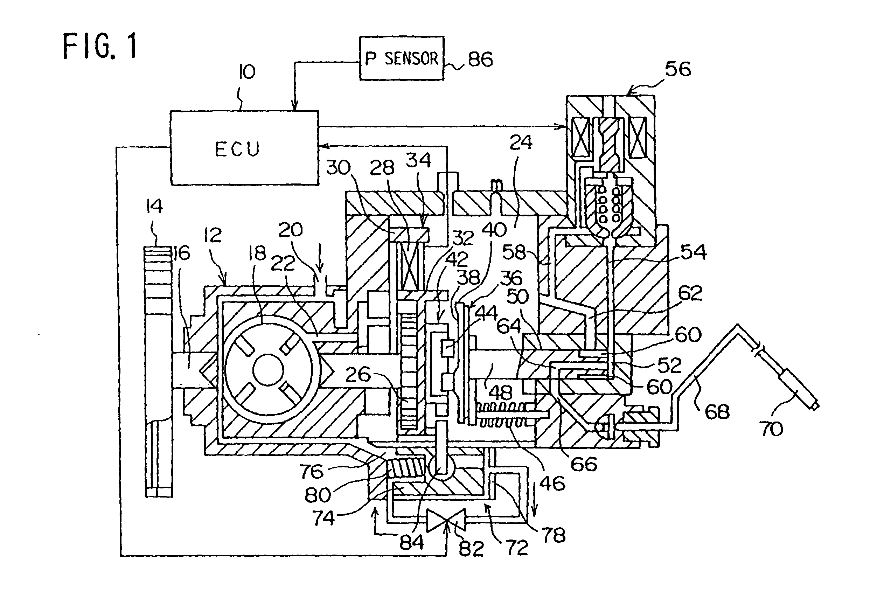

FIG.1 is a system structure diagram of a fuel injection apparatus of a diesel engine according to an embodiment of the present invention. The fuel injection apparatus according to the present embodiment comprises an electronic control unit 10 (hereinafter referred to as ECU 10) and a fuel injection pump 12. The fuel injection pump 12 is controlled by the ECU 10.

The fuel injection pump 12 has a drive pulley 14. The drive pulley 14 is connected to a crankshaft of the diesel engine via a belt. The drive pulley 14 rotates a single turn while the crankshaft rotates two turns. The drive pulley 14 is fixed to a drive shaft 16. The fuel injection pump 12 comprises a feed pump 18 that is operated by rotation of the drive shaft 16. It should be noted that FIG.1 shows the feed pump 18 being rotated 90 degrees, that is, the feed pump 18 is illustrated in a side view.

The feed pump 18 is connected to a low-pressure passage 20 and a feed passage 22. Fuel at a normal pressure is supplied to the low-pressure passage 20 from a fuel tank (not shown in the figure). The feed passage 22 is connected to a fuel chamber 24 that is formed in the fuel injection pump 12. The feed pump 18 is a bane type pump. The feed pump 18 pressurizes and delivers the fuel supplied from the low-pressure passage 20 to the fuel chamber 24 via the feed passage 22.

A rotor 26 is fixed to the drive shaft 16. Four toothed portions and four tooth cutout portions are alternately formed on an outer circumference surface of the rotor 26. Each of the toothed portions is provided with a plurality of teeth at a predetermined interval. On the other hand, each of the tooth cutout portions is formed as a smooth curve surface. A magnetic detecting coil 28 is provided above the rotor 26. A magnet 30 is provided above the magnetic detecting coil 28. The magnetic detecting coil 28 and the magnet 30 are fixed to a support member 32.

The magnetic detecting coil 28 generates a pulsed output signal each time one of the teeth of the rotor 26 passes a near point. The output signal of the magnetic detecting coil 28 is provided to the ECU 10. The ECU 10 determines that one of the teeth formed at a position adjacent to one of the tooth cutout portions is opposite to the magnetic detecting coil 28 when the pulsed output signal is detected after an output of the pulsed output signal is stopped for a relatively long time. The ECU 10 detects a rotational angle of the drive shaft 16 based on a number of the detected pulsed output signals. It should be noted that the rotor 26, the magnetic detecting coil 28 and the magnet 30 together are referred to as a NE pulser 34 as an entire structure.

An end of the drive shaft 16 is connected to a cam plate 36 via a coupling (not shown in the figure). A cam face 38 is formed on the cam plate 36. Four cams 40 are formed on the cam face 38 at equal intervals. A roller ring 42 is provided between the rotor 26 and the cam plate 36. The roller ring 42 is provided with a plurality of cam rollers 44 that contact the cams 40. The cam plate 36 is pressed toward the cam rollers 44 by a spring 46. Accordingly, the cam face 38 always contacts the cam rollers 44.

A plunger 48 is fixed to the cam plate 36. A cylinder 50 is formed in the fuel injection pump 12. The plunger 48 is inserted into the cylinder 50. The plunger 48 is rotatable about the axis of the cylinder 50 and is slidable in an axial direction.

A pump chamber 52 is formed between an end of the plunger 48 and an end of the cylinder 50. The fuel injection pump 12 is provided with a spill passage 54 that is connected to the pump chamber 52. The spill passage 54 is connected to a spill valve 56. The spill valve 56 is connected to a fuel passage 58 that is connected to the fuel chamber 24. The spill valve 56 is a solenoid valve that opens in a normal state (an off state) and closes (an on state) by a drive signal being supplied by the ECU 10. The pump chamber 52 is connected to the fuel chamber 24 when the spill valve 56 is open, and disconnected from the fuel chamber 24 when the spill valve 56 is closed.

Four inlet grooves 60 are provided on an end portion of the plunger 48 at equal intervals. The fuel injection pump 12 is provided with a fuel passage that connects one of the inlet grooves 60 to the fuel chamber 24 when the plunger 60 is at a predetermined angle. An outlet groove 64 is formed in the plunger 48 that connects between an end surface and a side surface. The fuel injection pump 12 is provided with four fuel distribution passages 66 that are sequentially connected to the outlet passage 64 each time the plunger 60 rotates 90 degrees. Each of the fuel distribution passage 66 is connected to a respective one of fuel supply passages 68. Each of the fuel supply passages 68 is connected to a fuel injection valve 70 that is provided to each cylinder of the diesel engine. The fuel injection valve 70 injects fuel into the cylinder of the diesel engine when a fuel having a pressure exceeding a predetermined pressure is supplied from the fuel injection pump 12.

In the fuel injection pump 12, the cam plate 36 and the plunger 48 rotate together with the drive shaft 16. When the cam plate 36 rotates, the cams 40 periodically override on the cam rollers 44. Thereby, a reciprocal motion (lift) is generated in the plunger 48 in the axial direction.

The fuel passage 62 is connected to one of the four inlet grooves 60 when the plunger 48 moves in a direction (the left direction in FIG.1) in which the volume of the pump chamber 52 is increased. Accordingly, a fuel is introduced into the pump chamber 52 in a process in which the plunger 48 moves in the above-mentioned direction. Hereinafter, this process is referred to as an inlet stroke.

The fuel distribution passage 66 is connected to the outlet passage 64 when the plunger 48 moves in a direction (the right direction in FIG.1) in which the volume of the pump chamber 52 is decreased. During a process in which the plunger 48 moves in the above-mentioned direction, the pressure in the pump chamber 52 is increased. Hereinafter, this process is referred to as a discharge stroke.

When the discharge stroke is performed while the spill valve 56 is closed, the fuel pressurized in the pump chamber 52 is injected into the diesel engine through the outlet passage 64, the fuel distribution passage 66, the fuel supply passage 68 and the fuel injection valve 70. On the other hand, when the discharge stroke is performed while the spill valve 56 is open, the pressurized fuel is spilled into the fuel chamber 24. At this time, the fuel is not injected into the diesel engine.

The fuel injection pump 12 is provided with a timer unit 72. The timer unit 72 is a mechanism for changing a relationship between a crank angle of the diesel engine and a timing of reciprocation of the plunger 48, that is, a relationship between the crank angle of the diesel engine and a timing of a start of the inlet stroke and the discharge stroke of the fuel injection pump 12. It should be noted that FIG.1 shows the timer 72 being rotated 90 degrees, that is, the timer 72 is illustrated in a side view.

The timer 72 has a piston 74. On a side of an end of the piston 74 (the left side in FIG.1), a low-pressure chamber 76 that is connected to the low-pressure passage 20 is formed. Additionally, on the side of the other end of the piston 74 (the right side in FIG.1), a high-pressure chamber 78 that is connected to the fuel passage 24 is formed.

A spring 80 urging the piston 74 toward the high-pressure chamber 78 is provided in the low-pressure chamber 76. The low-pressure chamber 76 and the high-pressure chamber 78 are connected to each other via a timing control valve 82 (hereinafter, referred to as TCV 82). The TCV 82 is duty controlled by the ECU 10 so as to control a communication between the high-pressure chamber 78 and the low-pressure chamber 76.

When the TCV 82 communicates the high-pressure chamber 78 with the low-pressure chamber 76, a pressure in the high-pressure becomes almost equal to a pressure in the low-pressure chamber 76. In this case, the piston 74 is maintained at a position shifted toward the high-pressure chamber 78. On the other hand, when the TCV 82 closes between the high-pressure chamber 78 and the low-pressure chamber 76, the pressure in the high-pressure chamber 78 becomes higher than the pressure in the low-pressure chamber 76. In this case, the piston 74 is maintained at a position shifted toward the low-pressure chamber 76 due to a pressure difference between the high-pressure chamber 78 and the low-pressure chamber 76.

A slide pin 84 engages the piston 74. The slide pin 84 is fixed to the roller ring 42. The roller ring 42 is rotatable in a plane perpendicular to a surface of FIG.1 by the slide pin 84 moving in right and left directions in FIG.1. When the roller ring 42 is rotated as mentioned above, the relationship between the crank angle of the diesel engine and the timing at which the roller cams 44 contact the cams 40 is changed, that is, the relationship between the crank angle of the diesel engine and the start timing of the inlet stroke and the discharge stroke in the fuel injection pump 12 is changed.

The fuel injection apparatus according to the present embodiment is provided with a pressure sensor 86. The pressure sensor 86 outputs an electric signal in response to an atmospheric pressure P. The output signal of the pressure sensor 86 is provided to the ECU 10. The ECU 10 detects the atmospheric pressure based on the output signal of the pressure sensor 86.

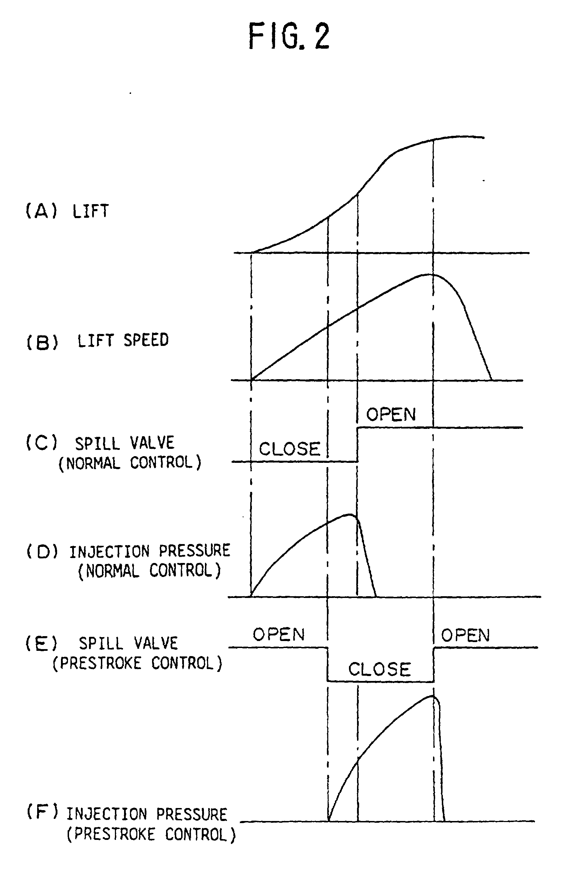

The ECU 10 controls a time for opening or closing the spill valve 56 in response to an operating condition of the diesel engine and the atmospheric pressure P so that an appropriate amount of fuel is injected at an appropriate timing and at an appropriate pressure. Additionally, the ECU 10 duty controls the TCV 82 in response to an operating condition of the diesel engine and the atmospheric pressure P so that an appropriate amount of fuel is injected at an appropriate timing and at an appropriate pressure. A description will be given below, with reference to FIG.2, of an operation of the fuel injection apparatus 12.

FIG.2 is a time chart for explaining the operation of the fuel injection pump 12. FIG.2-(A) and FIG.2-(B) show a change in the lift of the plunger 48 and a change in speed of the lift of the plunger 48, respectively. FIG.2-(C) and FIG.2-(E) show examples of the timing for opening and closing the spill valve 56. FIG.2-(D) shows a waveform of the fuel injection pressure generated when the spill valve 56 is operated at the timing shown in FIG.2-(C), and FIG.2-(F) shows a waveform of the fuel injection pressure generated when the spill valve 56 is operated at the timing shown in FIG.2-(E).

As sown in FIG.2-(A) and FIG.2-(B), after the lift of the plunger 48 is started, the plunger 48 moves by gradually increasing the speed of lift until the plunger 48 reaches near the maximum lift. After the plunger 48 reached near the maximum lift, the speed of the plunger 48 is rapidly decreased.

The amount of fuel delivered by the fuel injection pump 12 per unit time, that is, the fuel delivery rate of the fuel injection pump 12 is increased as the speed of lift of the plunger 48 is increased. Accordingly, the fuel delivery rate of the fuel injection pump 12 is at the minimum immediately after the lift of the plunger 48 is started, and is increased as the lift of the plunger 48 moves closer to the maximum lift.

FIG.2-(C) shows a timing for opening and closing the spill valve 56 when the ECU 10 performs a normal control. According to the normal control, the spill valve 56 is closed before the lift of the plunger 48 is started. In this case, the pressure in the pump chamber 52 is increased at the same time the lift of the plunger 48 is started. Thus, according to the normal control, an injection of fuel to the diesel engine is started immediately after the lift of the plunger 48 is started.

In the normal control, the spill valve 56 is opened at a time when an injection of a desired amount of fuel is completed after the lift of the plunger 48 is started. When the spill valve 56 is opened, the injection of fuel into the diesel engine is ended. Thus, according to the normal control, a desired amount of fuel can be injected into the diesel engine by using an area in which the fuel delivery rate is minimized.

The pressure of fuel injected into the diesel engine is increased as the fuel injection pump 12 delivers the fuel at a higher fuel delivery rate. Accordingly, when the spill valve 12 is operated by the normal control, the pressure of the fuel injection is maintained at a relatively low pressure as shown in FIG.2-(D).

FIG.2-(E) shows a timing for opening and closing the spill valve 56 when the ECU 10 performs a prestroke control. According to the prestroke control, the spill valve 56 is closed at the time when the lift of the plunger 48 reaches a predetermined prestroke level. In this case, an injection of fuel to the diesel engine is started at the time when the spill valve 56 is closed.

According to the prestroke control, the spill valve 56 is opened at a time when an injection of a desired amount of fuel is completed after the spill valve is opened. When the spill valve 56 is opened, the injection of fuel into the diesel engine is ended. Thus, according to the prestroke control, a desired amount of fuel can be injected into the diesel engine by using an area in which the fuel delivery rate is high.

As mentioned above, according to the prestroke control, the injection of fuel into the diesel engine can be performed during the period in which the fuel injection pump 12 delivers the fuel at a high fuel delivery rate. Thus, according to the prestroke control, as shown in FIG.2-(F), the pressure for fuel injection can be higher than that of the normal control.

When an automobile provided with the diesel engine moves in a high-altitude area, an amount of exhaust smoke tends to be increased due a decrease in an amount of intake air as compared to that of the automobile moving in a low-altitude area. An amount of exhaust smoke can be decreased by increasing the flammability of fuel. Additionally, the flammability of fuel can be increased by promoting a fine atomization of the fuel by injecting the fuel at a high pressure. Accordingly, by performing the above-mentioned prestroke control, an amount of exhaust smoke can be decreased when the automobile moves in a high-altitude area.

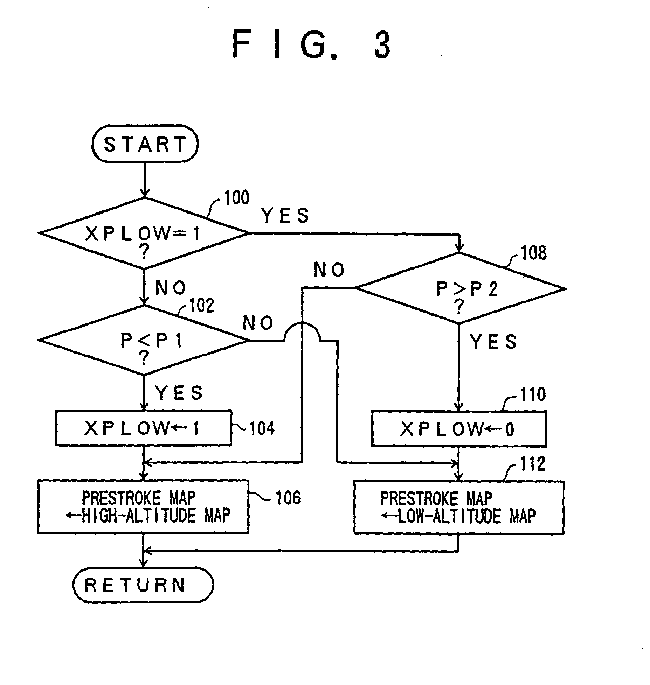

However, a level of noise of the diesel engine is increased as the fuel shows a better flammability. Accordingly, it is appropriate to perform the prestroke control only in a range in which the prestroke control is effective to decrease an amount of smoke. In order to satisfy the above-mentioned requirement, the apparatus according to the present embodiment features the prestroke control being performed according to different conditions between the automobile moving in a high-altitude area and in a low-altitude area. A description will be given below, with reference to FIG.3, of a feature of the apparatus according to the present embodiment.

FIG.3 is a flowchart of an example of a control routine performed by the ECU 10 so as to achieve the above-mentioned function. The routine shown in FIG.3 is an interruption routine which is started at a predetermined time. When the routine shown in FIG.3 is started, the process of step 100 is performed first.

In step 100, it is determined whether or not "1" is set to a flag XPLOW. The flag XPLOW is set to "1" when a decrease in an atmospheric pressure is recognized. Accordingly, if it is determined, in step 100, that XPLOW=1 is not established, it can be determined that the decrease in the atmospheric pressure was not recognized in the immediately preceding process cycle. In this case, the process of step 102 is performed next. On the other hand, if it is determined that XPLOW=1 is established, it can be determined that the decrease in the atmospheric pressure was recognized in the immediately preceding process cycle. In this case, the process of step 108 is performed next.

In step 102, it is determined whether or not the atmospheric pressure P detected by the pressure sensor 86 is lower than a predetermined pressure P1. The predetermined pressure P1 is a threshold value for determining whether or not the atmospheric pressure P is low enough to increase an amount of smoke. Accordingly, when it is determined, in step 102, that P<P1 is established, it can be determined that a process for decreasing the amount of smoke is needed. In this case, the process of step 104 is performed next. On the other hand, when it is determined, in step 102, that P<P1 is not established, it can be determined that a process for decreasing the amount of smoke is not needed. In this case, the process of step 112 is performed next.

In step 104, "1" is set to the flag XPLOW. If the process of step 104 is performed in the present process cycle, it will be determined, in step 100 of the subsequent process cycle, that XPLOW=1 is established.

In step 106, a map used for the prestroke control is changed to a map for a high-altitude area. The ECU 10 determines an amount of the prestroke by referring to the map based on an engine speed and a degree of throttle opening. In the present embodiment, the ECU 10 stores two maps so as to determine an amount of the prestroke. Specifically, the ECU 10 stores a map to be used when the automobile moves in a high-altitude area and a map to be used when the automobile moves in a low-altitude area.

In the map for a high-altitude area, an amount of the prestroke is defined for efficiently combusting fuel injected to the diesel engine under a condition in which the atmospheric pressure P is less than the predetermined pressure P1. On the other hand, in the map for a low-altitude area, an amount of the prestroke is defined for maintaining good quietness when the automobile moves in a low-altitude area. That is, the amount of the prestroke defined in the map of a low-altitude is less than that of the map for a high-altitude area.

In step 106, the map for a high-altitude area is selected as a map for controlling the amount of prestroke. After the process of step 106 is performed, the ECU 10 performs the prestroke control in accordance with the map for a high-altitude area. In this case, an amount of exhaust smoke can be decreased to a level almost equal to a level of exhaust smoke of the automobile moving in a low-altitude area despite that an amount of intake air is decreased due to a low atmospheric pressure P. When the above-mentioned process is completed, the routine of the present process cycle is ended.

As mentioned above, according to the present routine, when it is determined that "1" is set to the flag XPLOW, the process of step 108 is performed next.

In step 108, it is determined whether or not the atmospheric pressure P detected by the pressure sensor 86 is higher than a predetermined pressure P2. The predetermined pressure P2 is higher than the above-mentioned predetermined pressure P1. The predetermined pressure P2 is a threshold value for determining whether or not the atmospheric pressure P returns to a sufficiently high pressure. Accordingly, when it is determined, in step 108, that P>P2 is established, it can be determined that a process for decreasing the amount of smoke is not needed. In this case, the process of step 110 is performed next. On the other hand, when it is determined that P>P2 is not established, it can be determined that a process for decreasing the amount of smoke is still needed. In this case, the process of step 106 is performed next.

In step 110, the flag XPLOW is reset to "0". If the process of step 110 is performed in the present process cycle, it will be determined, in step 100 of the subsequent process cycle, that XPLOW=1 is not established.

In step 112, the map used for the prestroke control is changed to the map for a low-altitude area. After the process of step 112 is performed, the ECU 10 performs the prestroke control in accordance with the map for a low-altitude area. As mentioned above, in the map for a low-altitude area, an amount of the prestroke is defined for maintaining good quietness when the automobile moves in a low-altitude area. Thus, according to the above-mentioned process, good quietness can be maintained in the embodiment when the automobile moves in a low-altitude area. When the above-mentioned process is completed, the routine of the present process cycle is ended.

As mentioned above, in the fuel injection apparatus according to the present embodiment, by changing an amount of the prestroke in response to the atmospheric pressure p, an amount of exhaust smoke when the automobile moves in a high-altitude area can be reduced to a level almost equal to that of the automobile moving in a low-altitude area and also superior quietness can be provided to the diesel engine. In the above-mentioned embodiment, the prestroke control is performed in accordance with the map for a low-altitude area. However, the present invention is not limited to this process, and a normal control may be performed without performing the prestroke control.

The present invention is not limited to the specifically disclosed embodiment, and variations and modifications may be made without departing from the scope of the present invention.

A fuel injection apparatus of a diesel engine injects fuel into said diesel engine. The diesel engine intakes air at an atmospheric pressure. An amount of the fuel provided to the diesel engine per unit time is changed according to a predetermined scheme when the atmospheric pressure decreases, so that the amount of the fuel per unit time can be increased when the diesel engine is operated in a high-altitude area. Thus, a good flammability of the fuel in the diesel engine can be achieved, resulting in a reduction of an amount of smoke generated in the diesel engine when the diesel engine is operated in a high-altitude area.

## Claims

1. A fuel injection apparatus of a diesel engine for injecting fuel into said diesel engine, said diesel engine intaking air at an atmospheric pressure,
**characterised in that**:
an amount of the fuel provided to said diesel engine per unit time is changed according to a predetermined scheme when the atmospheric pressure decreases; so that the amount of the fuel per unit time is increased when said diesel engine is operated in a high-altitude area.

2. A fuel injection apparatus as claimed in claim 1,
**characterised in that**
an injection pressure of the fuel provided to said diesel engine is increased in a high-altitude area.

3. The fuel injection apparatus as claimed in claim 1,
**characterised in that**
a fuel injection pump (12) is provided in said fuel injection apparatus and a prestroke control is performed by said fuel injection apparatus so that a fuel delivery rate of said fuel injection pump (12) is set to a previously determined value designated by a map.

4. The fuel injection apparatus as claimed in claim 3,
**characterised in that**
contents of the map are changed when the atmospheric pressure decreases below a predetermined pressure so that the fuel delivery rate designated by the map is higher than the fuel delivery rate designated when the atmospheric pressure is above the predetermined pressure.

## Patentansprüche

1. Kraftstoffeinspritzanlage eines Dieselmotors zum Einspritzen von Kraftstoff in den Dieselmotor, wobei der Dieselmotor Luft bei Umgebungsdruck ansaugt,
**dadurch gekennzeichnet, dass**
eine zu dem Dieselmotor geführte Kraftstoffmenge pro Zeiteinheit gemäß einem vorbestimmten Schema geändert wird, wenn sich der Umgebungsdruck verringert; so dass die Kraftstoffmenge pro Zeiteinheit erhöht wird, wenn der Dieselmotor in einem Bereich großer Höhe betrieben wird.

2. Kraftstoffeinspritzanlage gemäß Anspruch 1,
**dadurch gekennzeichnet, dass**
ein Einspritzdruck des zu dem Dieselmotor geführten Kraftstoffs in einem Bereich großer Höhe erhöht wird.

3. Kraftstoffeinspritzanlage gemäß Anspruch 1,
**dadurch gekennzeichnet, dass**
eine Kraftstoffeinspritzpumpe (12) in der Kraftstoffeinspritzanlage vorgesehen ist, und durch die Kraftstoffeinspritzanlage eine Vorhubsteuerung durchgeführt wird, so dass eine Kraftstoffförderleistung der Kraftstoffeinspritzpumpe (12) auf einen vorher bestimmten Wert eingestellt wird, der durch ein Kennfeld bestimmt wird.

4. Kraftstoffeinspritzanlage gemäß Anspruch 3,
**dadurch gekennzeichnet, dass**
Inhalte des Kennfelds geändert werden, wenn der Umgebungsdruck unterhalb einen bestimmten Druck sinkt, so dass die durch das Kennfeld bestimmte Kraftstoffförderleistung höher als die Kraftstoffförderleistung ist, die bestimmt wird, wenn der Umgebungsdruck oberhalb des vorbestimmten Drucks ist.

## Revendications

1. Appareil d'injection de carburant d'un moteur diesel destiné à injecter du carburant dans ledit moteur diesel, ledit moteur diesel admettant de l'air à une pression atmosphérique, **caractérisé en ce que** :
une quantité du carburant fourni audit moteur diesel par temps unitaire est changée en conformité avec un schéma prédéterminé lorsque la pression atmosphérique diminue ; de sorte que la quantité du carburant par temps unitaire est accrue lorsque ledit moteur diesel est mis en oeuvre dans une zone de haute altitude.

2. Appareil d'injection de carburant selon la revendication 1, **caractérisé en ce que**
une pression d'injection du carburant fourni audit moteur diesel est accrue dans une zone de haute altitude.

3. Appareil d'injection de carburant selon la revendication 1, **caractérisé en ce que**
une pompe d'injection de carburant (12) est disposée dans ledit appareil d'injection de carburant et une commande de pré-course est effectuée par ledit appareil d'injection de carburant de sorte qu'une vitesse de délivrance de carburant de ladite pompe d'injection de carburant (12) soit établie à une valeur préalablement déterminée désignée par une table de consultation.

4. Appareil d'injection de carburant selon la revendication 3, **caractérisé en ce que**
les contenus de la table de consultation sont changés lorsque la pression atmosphérique diminue en dessous d'une pression prédéterminée de sorte que la vitesse de délivrance de carburant désignée par la table de consultation soit supérieure à la vitesse de délivrance de carburant désignée lorsque la pression atmosphérique est au-delà de la pression prédéterminée.
